Europäisches Patentamt

**European Patent Office**

Office européen des brevets

(19)

(11) Publication number: **0 030 924**

**A1**

## EUROPEAN PATENT APPLICATION

(12)

(21) Application number: **80830106.3**

(22) Date of filing: **11.12.80**

(51) Int. Cl.³: **B 60 N 1/10**

(30) Priority: **17.12.79 IT 6942379**

(43) Date of publication of application:
**24.06.81 Bulletin 81/25**

(84) Designated Contracting States:
**DE FR GB IT SE**

(71) Applicant: **S.I.R.P. STUDI INDUSTRIALI
REALIZZAZIONE PROTOTIPI S.p.A.
Via A.Grandi 11
I-10024 Moncalieri (Torino)(IT)**

(72) Inventor: **Mantovani, Aldo
Strada Val Pattonera 163/26
I-10133 Torino(IT)**

(74) Representative: **Jacobacci, Filippo et al,
c/o Jacobacci-CASETTA & PERANI S.n.c. Via Alfieri, 17
I-10121 Torino(IT)**

(54) **Motor vehicle seat.**

(57) A rear seat for a motor vehicle comprises a flexible squab (2) and a seat back (3) which can be folded down on to the squab (2) in such a way as to form a load platform. In the folded down position of the seat back (3) the squab (2) is lowered on to the floor of the passenger compartment allowing the seat to offer a reduced bulk in the vertical sense, and a lower level for the load platform to be obtained.

FIG. 1

EP 0 030 924 A1

## Motor Vehicle Seat

The present invention relates to a seat for motor vehicles.

The object of the invention is to provide a seat for motor vehicles which will be extremely simple, practical and functional, and which, in particular, will have a wide flexibility of use.

With a view to achieving this object, the present invention provides a motor vehicle seat, characterised in that it comprises:

a flexible squab having a front edge and a rear edge,

a support member for the said front edge of the flexible squab, pivotable to the floor of the passenger compartment of a motor vehicle about an axis parallel to the said front edge,

a support member for the said rear edge of the flexible squab, pivotable to the floor of the passenger compartment of the motor vehicle about an axis parallel to the said rear edge;  the said support members for the front and rear edges of the flexible squab constituting a pivoted parallelogram linkage which is displaceable between a rest position, in which the flexible squab is lowered onto the floor of the passenger compartment and follows any possible irregularities thereof, and a working position defined by an end-of-path stop which is associated with the support member for the front edge, in which the squab is held taut and spaced from the floor of the passenger compartment,

a seat back provided with a support structure pivotable at its lower end to the floor of the passenger compartment,

pivoted connection means interposed between the support structure for the seat back and the support member for the rear edge of the flexible squab, so that a rotation of this support member causes a corresponding rotation of the said support structure, and vice versa; the said seat back being displaceable between an upright position, in which it maintains the parallelogram linkage of the flexible squab in the said working position by means of the said pivoted connection means, and a tipped forward position corresponding to the rest position of the parallelogram linkage of the flexible squab, in which the said seat back rests on the flexible squab in such a way that the seat has, in this condition, a reduced vertical height, the rear face of the seat back being arranged to constitute a portion of the load platform of the motor vehicle in the tipped forward condition of the seat back, and

fixing means for fixing the seat back to the fixed structure of the motor vehicle in the upright position of the seat back.

The invention will now be described with reference to the appended drawings, provided purely by way of non-limitative example, in which:

Figure 1 is a partial perspective view which illustrates a motor vehicle seat according to the present invention in a first condition of use,

Figure 2 is a side view which illustrates the seat of Figure 1 in a second condition of use,

Figure 3 is a perspective view on an enlarged scale of a detail of Figure 1,

Figure 4 is an exploded perspective view of the detail illustrated in Figure 3,

Figure 5 is a side view of the detail of Figure 3,

Figure 6 is a view of the detail of Figure 3 in the direction of the arrow A shown in Figure 5,

Figure 7 is a section taken on the line VII-VII of Figure 6,

Figure 8 is an exploded perspective view on an enlarged scale of a detail of Figure 1,

Figure 9 is a side view of the detail of Figure 8, and

Figure 10 is a section taken on the line X-X of Figure 9.

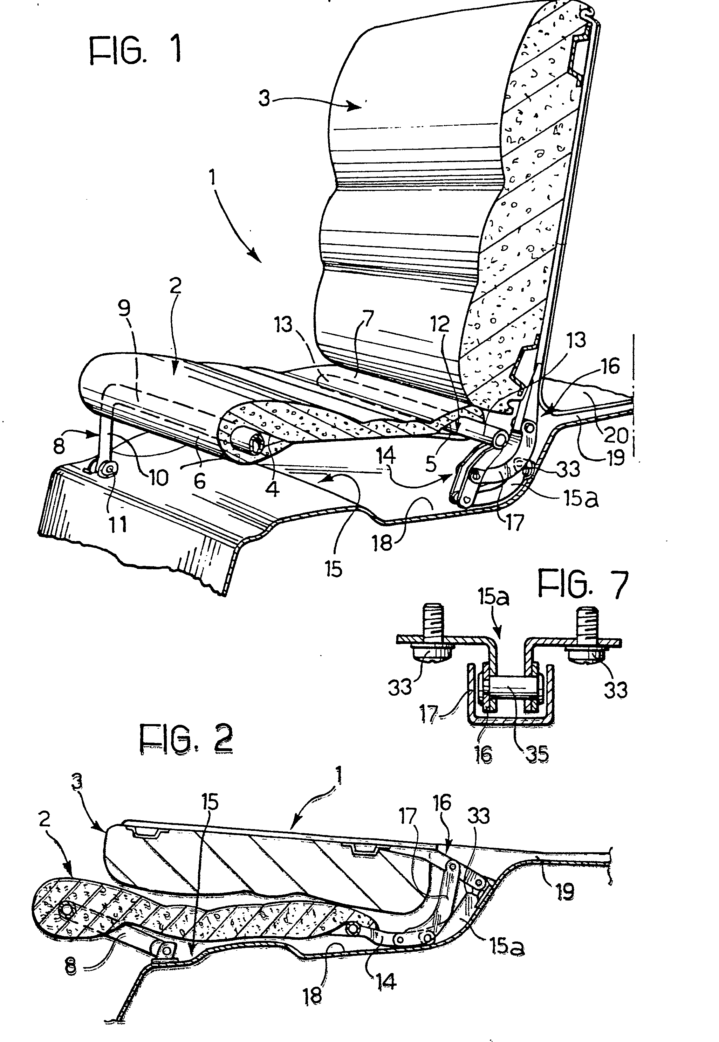

In the drawings there is generally indicated a seat 1 for motor vehicles, comprising a flexible squab 2 and a seat back 3. The squab 2 has two elongate through holes 4, 5 formed, respectively, along its front edge 6 and along its rear edge 7. A support member 8 constituted by a tubular element bent into the form of a U, has its central branch 9 inserted into the hole 4 and its two end arms 10 (one of which is visible in Figure 1) pivoted at their free ends on to supports 11 fixable to the floor 15 of the passenger compartment of a motor vehicle. The rear edge 7 of the flexible seat squab 2 is supported by a support member 12 comprising a tubular element 13 inserted into the hole 5, and two levers 14 (one of which is visible in Figure 1) each of which is fixed at one end on to the tubular element 13 and is pivoted at the opposite end on a corresponding support element 15a fixable on to the floor 15 of the passenger compartment of the motor vehicle.

The seat back 3 is provided with a support structure 16 which is pivoted at the bottom on the two support elements 15a (one of which is visible in the drawing) to which the two levers 14 are connected. Two small connecting links 17 are carried, respectively, by the two support elements 15a. Each connecting link 17 is pivoted at one end to the corresponding lever 14 and at the other end to the support structure 16 of the seat back 3 of the seat 1.

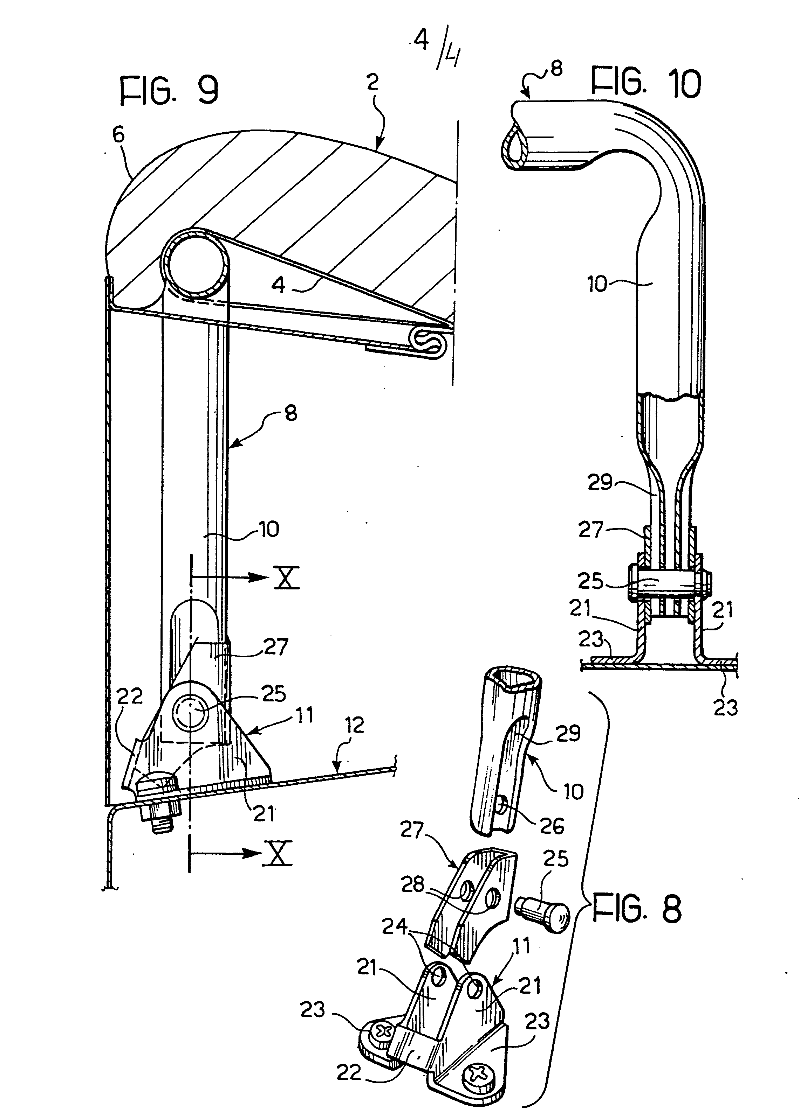

As illustrated in Figure 1, the floor 15 of the passenger compartment of the motor vehicle on which the seat 1 is to be mounted has a flat front portion 18 disposed at a lower level than a flat rear portion 19. A single flexible covering element 20 covers the flat rear portion 19 of the floor 15 and the rear face of the seat back 3 of the seat. As illustrated in Figure 8, each support 11 includes a pair of plates 21 joined together by a small bridge 22 and provided, respectively, with flanges 23 by means of which they are fixable to the floor 15 of the motor vehicle. The two plates 21 are provided with holes 24 for receiving a pin 25 for —————————————

the pivoting of the free end of the arms 10 of the support member 8. This end is provided with a hole 26 in which the pivot pin 25 is received. This latter is also utilised for fixing an additional member 27 to the free end of the arm 10. This member 27 is constituted by a channel element having, in each side wall, holes 28 intended to receive the pin 25. The additional member 27 cooperates with the small bridge 22 of the support 11 to define an end-of-path position of the support member 8. The small bridge 22 functions, in fact, as a stop element for the additional member 27 which moves rigidly with the end of the arm 10 of the support member 8. Consequently, this latter can tip forwardly until it is carried into contact with the floor 15 of the passenger compartment of the motor vehicle, and can be tipped rearwardly until the additional members 27 are carried into contact with the two small bridges 22 with which the supports 11 are provided. Each of the end arms 10 of the support member 8 has, at its free end, a flattened portion 29 which is received between the two sides of the additional members 27.

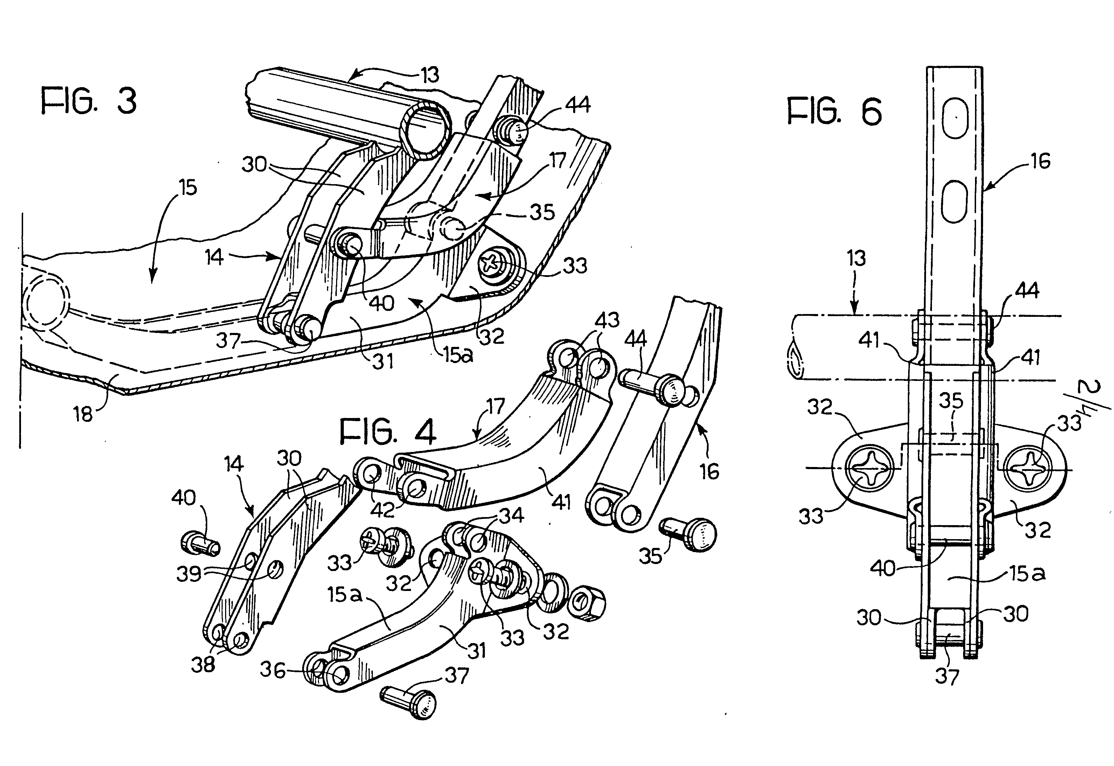

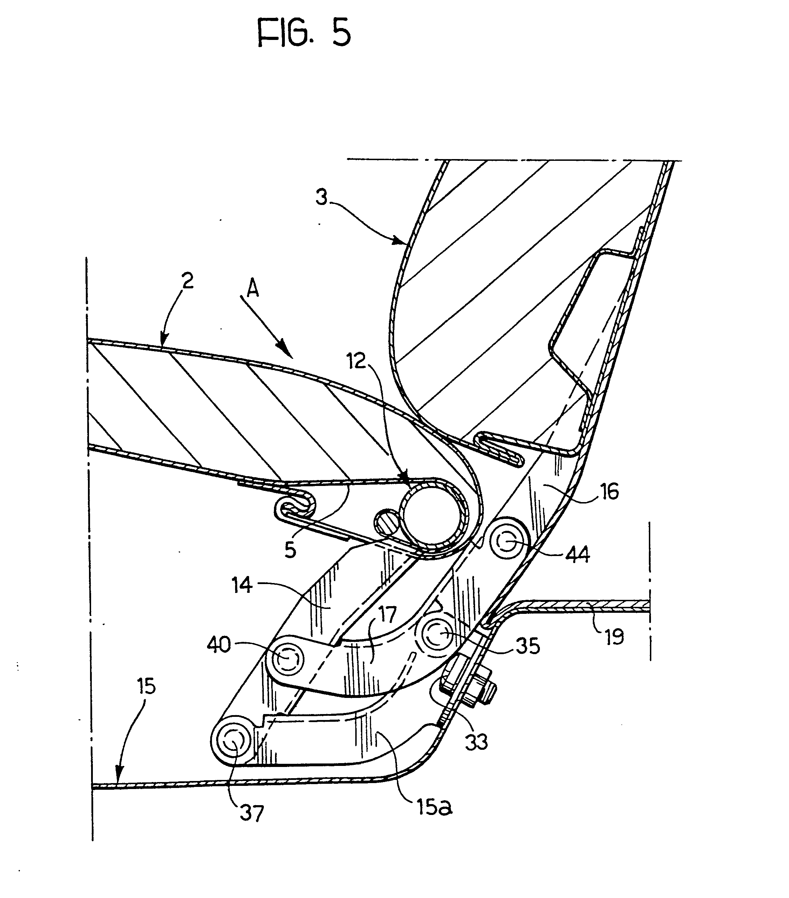

With reference to Figures 3 to 6, each of the levers 14 forming part of the support member 12 for the rear edge 7 of the squab 2 is constituted by a pair of parallel plates 30 fixed at one end on to the tubular element 13 and pivoted at the opposite end on to the corresponding support element 15a. This latter is in the form of a curved channel having two side walls 31. Each of the side walls 31 is provided, at one end of the element 15a, with a flange 32 fixable by means of bolts 33 on to a zone of the floor 15 which interconnects the two flat portions 18 and 19. The two side walls 31 of the channel constituting the support element 15a are further provided at the ends of the channel nearest the flanges 32 with holes 34 to receive a pin 35 for pivoting the support structure 16 of the seat back 3. The side walls 31 of the support element 15a have, moreover, at their ends opposite the holes 34, two further holes 36 to receive a pin 37 for pivoting the two plates 30 constituting the lever 14. Each of the plates 30 has at its end opposite the tubular element 13 a hole 38 to receive the pivot pin 37, and, at an intermediate point, a hole 39 to receive a pivot pin 40 for pivoting the connecting link 17. This latter is constituted by a channel element having two side walls 41 each of which is provided at one end with a hole 42 for pivoting on the pin 40, and at the opposite end with a hole 43 for pivoting on a pin 44 carried by the support structure 16 of the seat back 3.

The member 8 which supports the front edge 6 of the seat squab 2 and the member 12 which supports the rear edge of the seat squab 2 form part of a pivoted parallelogram linkage for the seat squab. This linkage is displaceable between a rest position, illustrated in Figure 2, in which the said support members are turned forwardly, and a working position, illustrated in Figure 1, in which these support members are in their end-of-path positions defined by the stops 22 with which the above described supports 11 are provided. In the said rest condition the distance between the central branch 9 of the tubular element 8 and the tubular element 13 is less than the distance between these two elements in their working positions. In the rest condition, the said flexible seat squab 2 is lowered on to the floor 15 and follows the irregularities of it. In the working condition illustrated in Figure 1, the seat squab 2 is, on the other hand, stretched taut and spaced from the floor 15 of the passenger compartment of the motor vehicle. When the seat squab 2 is located in its lowered position on the floor 15, the seat back 3 is tipped forwardly and rests on the squab 2. In this condition the seat 1 occupies a much reduced vertical height thanks to the flexibility of the squab 2. In this condition, moreover, the rear face of the seat 3 is located at the same level as the flat portion 19 of the floor 15, so that it forms together with this portion a single load platform covered by the element 20.

When the seat back 3 is disposed in its upright position, in which it can be maintained by means of fixing means of known type (not illustrated) which connect it to the fixed structure of the motor vehicle, the support member 8 is located in its end-of-path position defined by the stops 22 of the supports 11, whilst the levers 14 are maintained by the seat back 3, through the interconnecting links 17, in a position such that the squab 2 is stretched between the tubular elements 9 and 13.

If the seat back 3 is located in its upright position illustrated in Figure 1, then in order to move the seat into the condition illustrated in Figure 2, it is sufficient first to cause the disengagement of the fixing means which connect the seat back 3 to the fixed structure of the motor vehicle, and secondly to cause the rotation or tipping forward of the support member 8 of the squab 2 possibly accompanied at the same time by movement of the seat back 3. When, on the other hand, it is desired to change from the condition illustrated in Figure 2 to the condition illustrated in Figure 1, it is sufficient to act on the seat back 3, causing a rotation in a clockwise sense, as viewed in Figure 2, to carry the seat squab 2 into the taut condition
illustrated in Figure 1.

Naturally the effects of the present model extend
to other embodiments which operate in the same way
by utilising the same inventive concept.

0030924

- 9 -

Claims:

1. A motor vehicle seat, characterised in that it comprises:

a flexible seat squab (2) having a front edge (6) and a rear edge (7),

a support member (8) for the said front edge (6) of the flexible squab (2), pivotable to the floor (15) of the passenger compartment of a motor vehicle about an axis parallel to the said front edge (6),

a support member (12) for the said rear edge (7) of the flexible squab (2), pivotable to the floor (15) of the passenger compartment of the motor vehicle about an axis parallel to the said rear edge (7); the said support members (8, 12) for the front and rear edges (6, 7) of the flexible squab (2) constituting a pivoted parallelogram linkage which is displaceable between a rest position, in which the flexible squab (2) is lowered onto the floor (15) of the passenger compartment and follows any possible irregularities thereof, and a working position defined by an end-of-path stop (22) which is associated with the support member (8) for the front edge (6), in which the squab (2) is stretched taut and spaced from the floor (15) of the passenger compartment,

a seat back (3) provided with a support structure (16) pivotable at its lower end to the floor (15) of the motor vehicle;

pivoted connection means (17) interposed between the support structure (16) for the seat back (3) and the support member (12) for the rear edge (7) of the flexible squab (2) such that a rotation of this support member (12) causes a corresponding rotation of the support structure (16), and vice versa; the said seat back (3) being displaceable between an upright position in which it maintains the parallelogram linkage of the flexible squab (2) in the said working position by means of the said pivoted connection means (17), and a tipped forward position, corresponding to the rest position of the parallelogram linkage of the flexible squab (2), in which the said seat back (3) rests on the flexible seat squab (2) so that the seat has, in this condition, a reduced vertical height, the rear face of the seat back (3) being arranged to constitute a portion of the load platform of the motor vehicle in the tipped forward condition of the said seat back (3), and

fixing means for fixing the seat back (3) of the seat to the fixed structure of the motor vehicle in the upright position of the seat back (3).

2. A seat according to Claim 1, characterised in that the support member (8) for the front edge (6) of the flexible squab (2) includes a tubular element which is bent into the form of a U and has a central branch (9) inserted into an elongate hole (4) formed along the front edge (6) of the squab (2), and two end arms (10) the free ends of which are pivoted on to two supports (11) fixable to the floor (15) of the motor vehicle.

3. A seat according to Claim 2, characterised in that each of the said supports (11) is provided with an end-of-path stop (22) cooperating with an additional member (27) fixed to the free end of the corresponding end arm (10) of the said U-shape tubular element, in such a way as to limit the rotation of this end arm (10) in the rearward direction of the squab (2).

4. A seat according to Claim 3, characterised in that each of the two end arms (10) of the U-shaped tubular element has a flattened portion (29) adjacent its free end.

5. A seat according to Claim 1, characterised in that the support member (12) for the rear edge (7) of the flexible squab (2) and the support structure (16) for the seat back (3) are pivoted together on a pair of support elements (15a) fixable on to the floor (15) of the motor vehicle.

6.. A seat according to Claim 5, characterised in that the support member (12) for the rear edge (7) of the flexible squab (2) includes a tubular element (13) inserted into an élongate hole (5) formed along the rear edge (7) of the squab and a pair of levers (14) each fixed at one end to the tubular element (13) and pivoted at the opposite end to the respective support element (15a) which is fixable on to the floor (15) of the motor vehicle.

7. A seat according to Claim 6, characterised in that the said pivoted connection means are constituted by a pair of connecting links (17) each of which is pivoted at one end to one of the said levers (14) and at the opposite end to the support structure (16) for the seat back.

$1/4$

FIG. 1

FIG. 7

FIG. 2

FIG. 3

13

44

30

15

17

14

35

37

40

33

31

32

18

15a

FIG. 4

17

14

30

43

44

16

40

42

41

34

39

33

32

15a

35

36

31

33

32

37

38

FIG. 6

16

13

44

41

41

32

35

33

33

32

40

15a

30

30

37

2/4

0030924

FIG. 5

0030924

FIG. 9

FIG. 10

FIG. 8

European Patent
Office

**EUROPEAN SEARCH REPORT**

Application number

EP 80 83 0106

## DOCUMENTS CONSIDERED TO BE RELEVANT

| Category | Citation of document with indication, where appropriate, of relevant passages | Relevant to claim |
|---|---|---|
| | US - A - 2 997 335 (CHECKER MOTORS CORP.) <br><br> * Column 1, lines 67-72; column 2; column 3, lines 1-40; figure 1 * <br><br>-- | 1 |
| | GB - A - 569 532 (R.J. COUSINS) <br><br> * Page 2, left-hand column, lines 12-65; right-hand column, lines 66-109; figure 1 * <br><br>-- | 1,5,7 |
| | FR - A - 1 284 334 (L. SEARLE) <br><br> * Page 1, left-hand column, lines 19-20; page 2, right-hand column, lines 2-5, 43-45; page 3, left-hand column, lines 16-17; figures 2,6,9 * <br><br>-- | 1,2 |
| | GB - A - 738 477 (C.P. LILJENGREN) <br><br> * Page 1, left-hand column, lines 15-16; page 3, left-hand column, lines 40-42; right-hand column, lines 72-91; page 4, left-hand column, lines 16-21; figures 3,4 * <br><br>-- | 1,2 |
| | US - A - 2 797 732 (CHRYSLER CORP.) <br><br> * Column 4, lines 55-65; figures 1,9 * <br><br>-- | 1,3 |
| | FR - A - 1 576 688 (B.J. BALL LTD.) <br><br> * Figures 1,3 * <br><br>-- ./. | 1,4 |

**CLASSIFICATION OF THE APPLICATION (Int. Cl.³)**

B 60 N 1/10

**TECHNICAL FIELDS SEARCHED (Int. Cl.³)**

B 60 N
A 47 C

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 24-03-1981 | CAPRARI |

EPO Form 1503.1 06.78

European Patent
Office

**EUROPEAN SEARCH REPORT**

Application number

EP 80 83 0106
-2-

## DOCUMENTS CONSIDERED TO BE RELEVANT

| Category | Citation of document with indication, where appropriate, of relevant passages | Relevant to claim |
|---|---|---|
| | FR - A - 833 269 (A. CITROEN)<br><br>* Page 2, left-hand column, lines 5-11; figures 1-3 *<br><br>-- | 1,6 |
| A | US - A - 1 729 669 (J. GEORGE)<br><br>* Whole document; figures 2-4 *<br><br>---- | 1 |

CLASSIFICATION OF THE
APPLICATION (Int. Cl. 3)

TECHNICAL FIELDS
SEARCHED (Int. Cl. 3)